# EUROPÄISCHE PATENTANMELDUNG

(11) **EP 1 304 794 A1**
(43) Veröffentlichungstag der Anmeldung: **23.04.2003**
(21) Anmeldenummer: 01440356.2
(22) Anmeldetag: 22.10.2001
(51) Int. Cl.: H02P 7/29

(54) **Schaltungsanordnung zur Regelung eines elektrischen Verbrauchers**

(71) Anmelder: ALCATEL, 75008 Paris (FR)
(72) Erfinder: Wölfel, Werner, 70499 Stuttgart (DE)
(74) Vertreter: Brose, Gerhard, Dipl.-Ing.

(57) **Zusammenfassung**

Die Erfindung betrifft eine Schaltungsanordnung zur Regelung der einem elektrischen Verbraucher (L), insbesondere einem Lüfter oder Heizer in einem Kraftfahrzeug, aus einer Gleichspannungsquelle zuzuführenden elektrischen Leistung mit einem in Reihe mit dem zu regelnden Verbraucher (L) zu schaltenden Feldeffekttransistor (T1) und einer Regelschaltung (C) zur Ansteuerung des Feldeffekttransistors (T1), bei welcher dem Feldeffekttransistor (T1) ein zweiter Feldeffekttransistor in Reihe nachgeschaltet und einem der Feldeffekttransistoren (T2) ein Widerstand (R) parallelgeschaltet ist, und mit einer Regelschaltung (C), die derart ausgebildet ist, daß sie beide Feldeffekttransistoren (T1, T2) im Sinne eines Überblendens zwischen zwei Endzuständen ansteuert, in denen jeweils der eine Feldeffekttransistor sperrt und der andere leitet.

## Beschreibung

Die Erfindung betrifft eine Schaltungsanordnung zur Regelung der einem elektrischen Verbraucher, insbesondere einem Lüfter oder Heizer in einem Kraftfahrzeug, aus einer Gleichspannungsquelle zuzuführenden elektrischen Leistung, nach dem Oberbegriff des Anspruchs 1.

Zur Regelung der einem elektrischen Verbraucher aus einer Gleichspannungsquelle zuzuführenden elektrischen Leistung werden heutzutage häufig Leistungs-Feldeffekttransistoren verwendet, die einfach in Reihe zu dem zu regelnden elektrischen Verbraucher geschaltet werden. Ihre Anwendung ist an sich verhältnismäßig unproblematisch, insbesondere sind sie einfach anzusteuern.

Ein häufiges Anwendungsgebiet ist das der Lüfter oder Heizer in Kraftfahrzeugen. Diese werden dann aus der Bordbatterie mit einer Spannung von 12 Volt betrieben. Dabei treten wegen der niedrigen Spannung verhältnismäßig hohe Ströme auf. Beispielsweise benötigt ein Verbraucher mit 360 W Leistung einen Strom von 30 A. Bei der Regelung dieser Leistung tritt im regelnden Leistungs-Feldeffekttransistor maximal eine Verlustleistung von 90 W auf. Geeignete Feldeffekttransistoren sind zumindest sehr teuer. Wegen der durch die hohe Verlustleistung bedingten hohen Temperaturen ist in der Regel auch die Erwartung an die Lebensdauer gering.

Grundsätzlich können Feldeffekttransistoren auch verwendet werden, um Verbraucher getaktet ein- und auszuschalten und so eine Leistungsregelung zu erreichen. Dabei entstehen dann verhältnismäßig geringe Verlustleistungen. Insbesondere wegen der dabei bestehenden, nur aufwendig in den Griff zu bekommenden Neigung zu Funkstörungen ist diese Lösung aber oft unerwünscht. Durch Parallelschaltung von Feldeffekttransistoren ist es zwar möglich, auf preisgünstigere Transistoren auszuweichen. Die thermischen Probleme reduzieren sich dabei aber nur geringfügig. Außerdem teilen sich die Ströme nicht problemlos zu gleichen Teilen auf.

Der Erfindung liegt die Aufgabe zugrunde, eine Schaltungsanordnung der genannten Art anzugeben, die eine kostengünstige Lösung des Problems ermöglicht.

Diese Aufgabe wird erfindungsgemäß gelöst durch eine Schaltungsanordnung nach der Lehre des Anspruchs 1.

Der Erfindung liegt der Gedanke zugrunde, die bei einer preisgünstigen analogen Lösung zwangsläufig entstehende Verlustleistung weitgehend auf einen preisgünstigen Widerstand zu verlagern. Bei günstiger Auslegung kann damit erreicht werden, daß selbst im ungünstigsten Arbeitspunkt die beiden erfindungsgemäß verwendeten Feldeffekttransistoren zusammen nur halb soviel Verlustleistung abzuführen haben wie bei Verwendung nur eines solchen.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt einen Verbraucher und eine Schaltungsanordnung nach dem Stand der Technik.
- Figur 2: zeigt ein Schaubild, in dem für das Beispiel nach Figur 1 die Verlustleistung als Funktion des Verbraucherstroms dargestellt ist.
- Figur 3: zeigt einen Verbraucher und eine erfindungsgemäße Schaltungsanordnung.
- Figur 4: zeigt ein Schaubild entsprechend dem in Figur 2 für die Schaltungsanordnung nach Figur 3.

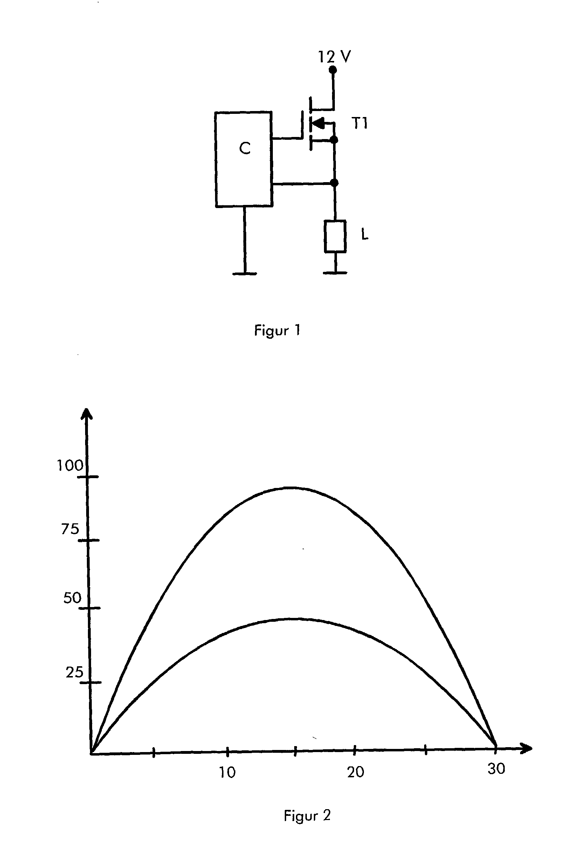

Anhand der Figur 1 wird zunächst eine Anordnung aus einem Verbraucher und einer Schaltungsanordnung nach dem Stand der Technik beschrieben. Hier wird davon ausgegangen, daß der zu regelnde Verbraucher und die ihn regelnde Schaltungsanordnung zwei getrennte Baugruppen und insbesondere zwei getrennte wirtschaftliche Einheiten sind. Die gezeigte Schaltungsanordnung nach dem Stand der Technik besteht hier aus einem Feldeffekttransistor T1 als Regeltransistor und einer Regelschaltung C. Der Feldeffekttransistor T1 ist, hier mit seiner Quelle, mit einem zu regelnden Verbraucher L derart in Reihe geschaltet, daß sie insgesamt an die Betriebsspannung, hier zwischen die Pole "12V" und Masse der Bordstromversorgung eines Kraftfahrzeugs, angelegt sind. Die Regelschaltung C legt zwischen Steuergitter und Quelle des Feldeffekttransistors T1 eine Steuerspannung an, mittels derer der Feldeffekttransistor T1 zwischen völligem Leiten und völligem Sperren geregelt werden kann. Die Regelschaltung C ist auch an Masse angeschlossen; eine für die Regelschaltung auch erforderliche Betriebsspannung, in der Regel ebenfalls die Bordstromversorgung, ist nicht eingezeichnet.

Nach welchen Kriterien die Regelschaltung C hier arbeitet, ist nicht Gegenstand der vorliegenden Erfindung. Dies gilt sowohl für die Frage, ob hier wirklich eine Größe geregelt oder nur gesteuert wird, als auch dafür, was als Soll- und was als Istgröße verwendet wird. Sollgröße kann sowohl ein fest vorgegebener Grenzwert sein, der nicht über- oder unterschritten werden darf als auch ein manuell vorgegebener Wert. Die Istgröße kann eine gemessene Temperatur oder auch eine am Verbraucher anliegende Spannung sein.

Figur 2 zeigt hierzu ein Schaubild, in dem für das Beispiel nach Figur 1 die Verlustleistung als Funktion des Verbraucherstroms dargestellt ist. Als Verbraucher wird hier eine rein ohmsche Last unterstellt, auch wenn es sich beispielsweise um einen Lüftermotor handelt. Beim oben erwähnten Beispielfall mit einem Strom von 30 A bei 12 V und einer Leistung von 360 W liegt damit ein ohmscher Widerstand von 0,4 Ohm vor. Die Verlustleistung im Regeltransistor, um die es hier geht, ist Null, wenn entweder kein Strom fließt und damit beim Minimum der Last und außerdem, wenn der Regeltransistor voll leitet und damit (praktisch) keine Spannung an ihm abfällt, also beim Maximum der Last. Die maximale Verlustleistung tritt auf, wenn die angelegte Spannung sich auf den Regeltransistor T1 und den Verbraucher L zu gleichen Teilen, also hälftig, aufteilt. Dann fließt auch die hälfte des maximalen Stroms, wodurch jetzt ein Viertel der maximal auftretenden Leistung im Regeltransistor T1 verloren geht. Gleich viel, nämlich ebenfalls ein Viertel der maximal auftretenden Leistung, hier also 90 W, wird in diesem Betriebspunkt vom Verbraucher aufgenommen. Dazwischen ergibt sich ein parabelförmiger Verlauf (obere Kurve).

Darunter ist in einer weiteren Kurve die Verlustleistung in einem Transistor angegeben, für den Fall, daß zwei gleiche Transistoren parallelgeschaltet sind und sich die Verlustleistung auf beide gleich aufteilt. In der Summe ergeben sich aber ebenfalls wieder dieselben Verluste wie bei nur einem Transistor (obere Kurve).

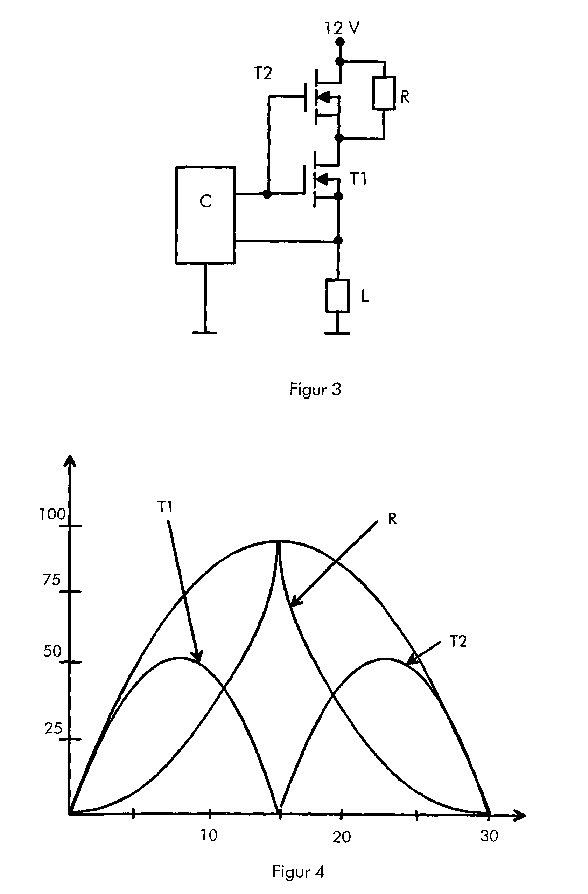

Solange die Leistung im Verbraucher L nicht getaktet ein- und ausgeschaltet wird, sondern der Strom (oder die Spannung) linear gedrosselt wird, wird in derjenigen Schaltungsanordnung, die dies durchführt, auf jeden Fall insgesamt sich dieselbe Verlustkurve ergeben wie die obere Kurve in Figur 2. Durch eine erfindungsgemäße Schaltungsanordnung, wie sie beispielhaft in Figur 3 gezeigt wird, wird aber erreicht, daß ein großer Teil der Verlustleistung nicht in einem Transistor, sondern in einem ohmschen Widerstand verbraucht wird. Ohmsche Widerstände sind nicht nur billiger als Transistoren, die dieselbe Last aufnehmen müssen, sie sind darüber hinaus auch bei viel höheren Temperaturen noch einsatzfähig. Hinzu kommt zumindest für den Fall, daß der Verbraucher eine Heizung ist, daß die Verlustwärme eines Widerstandes leichter als Teil der Nutzleistung mit verwendet werden kann.

Im Beispiel nach Figur 3 ist zwischen die Pole "12V" und Masse der Bordstromversorgung in Reihe zum Feldeffekttransistor T1 und dem Verbraucher L noch ein weiterer Feldeffekttransistor T2 eingeschleift. Außerdem sind die Steueranschlüsse der beiden Feldeffekttransistoren parallelgeschaltet.

Dem weiteren Feldeffekttransistor T2 ist nun noch ein Widerstand R parallelgeschaltet. Dabei ist nun noch angenommen, daß der Widerstandswert des parallelgeschalteten Widerstands R gleich dem Widerstandswert des Verbrauchers L ist, wobei unterstellt wird, daß beide unveränderlich sind und insbesondere der Verbraucher L nicht durch Umschaltmaßnahmen verändert wird.

Bei Verwendung der hier dargestellten selbstsperrenden N-Kanal-Typen ergibt sich eine besonders einfache Ansteuerung und damit auf einfache Weise die in Figur 4 dargestellte Betriebsweise:

Ist die Ansteuerspannung gleich Null, so sind beide Transistoren gesperrt. Es fließt dann überhaupt kein Strom. Bei allmählich steigender Ansteuerspannung wird zunächst der Transistor T1 mehr und mehr geöffnet, Transistor T2 bleibt nach wie vor geschlossen, der Strom fließt dann durch den Widerstand R. wie im Fall der Figur 2 steigt die Verlustleistung im Transistor T1 bis zu einem Maximalwert an und fällt dann wieder auf Null ab, bis der Transistor T1 voll leitet.

In diesem Stadium ist nun die Gesamtspannung auf den Widerstand R und den Verbraucher L aufgeteilt, durch den Transistor T2 fließt noch kein Strom. Unter der obigen Annahme, daß der Widerstandswert des parallelgeschalteten Widerstands R gleich dem Widerstandswert des Verbrauchers L ist, die auch der Figur 4 zugrunde liegt, fällt in diesem Betriebspunkt die maximale Verlustleistung an und zwar ausschließlich im Widerstand R. In den Transistoren T1 und T1 ergibt sich keine Verlustleistung.

Bei weiter steigender Ansteuerspannung wird nun allmählich auch der Transistor T2 geöffnet, bis zum Schluß beide Transistoren voll leiten. Dabei geht die Verlustleistung im Widerstand R vom Maximalwert wieder auf Null zurück, während die Verlustleistung im Transistor T2 erst ansteigt und dann wieder auf Null abfällt. Am Ende leiten beide Transistoren, der Verbraucher L liegt an der vollen Spannung und nimmt den maximalen Strom von 30 A und damit die maximale Leistung von 360 W auf.

In diesem einfachen Fall tritt immer nur in einem der beiden Transistoren ein Verlust auf und zwar maximal die Hälfte des maximal auftretenden Verlusts, im Beispiel 45 W. Es ist damit auch maximal nur dieser Verlust über Kühlkörper von den Transistoren abzuführen. Es genügt deshalb auch, wenn beide Transistoren gemeinsam einen Kühlkörper aufweisen, der für diese Wärmeleistung ausgelegt ist. Da der Widerstand R heißer werden darf, genügt hierfür eine einfachere Kühlung als für eine vergleichbare Wärmeabfuhr von Transistoren.

Für den Fall, daß die beiden Widerstandswerte aus welchen Gründen auch immer nicht gleich sein können, gehen die genannten Vorteile im Umfang der Ungleichheit verloren. Ein Restvorteil bleibt aber doch erhalten.

Sollten sich aus bestimmten Gründen oder für bestimmte Anwendungsfälle andere Arten von Feldeffekttransistoren als geeigneter erweisen, dann muß möglicherweise auch deren Ansteuerung geändert werden, unter Umständen ist dann eine getrennte Ansteuerung der beiden Transistoren erforderlich. Auf jeden Fall bleibt aber gegenüber der Schaltungsanordnung nach Figur 1 eine Verbesserung übrig.

## Patentansprüche

1. Schaltungsanordnung zur Regelung der einem elektrischen Verbraucher (L), insbesondere einem Lüfter oder Heizer in einem Kraftfahrzeug, aus einer Gleichspannungsquelle zuzuführenden elektrischen Leistung mit einem in Reihe mit dem zu regelnden Verbraucher zu schaltenden Feldeffekttransistor (T1) und einer Regelschaltung zur Ansteuerung des Feldeffekttransistors (T1), **dadurch gekennzeichnet, daß** dem Feldeffekttransistor (T1) ein zweiter Feldeffekttransistor (T2) in Reihe nachgeschaltet ist, daß einem der Feldeffekttransistoren (T2) ein Widerstand parallelgeschaltet ist, und daß die Regelschaltung (C) derart ausgebildet ist, daß sie beide Feldeffekttransistoren (T1, T2) im Sinne eines Überblendens zwischen zwei Endzuständen ansteuert, in denen jeweils der eine Feldeffekttransistor sperrt und der andere leitet.

2. Schaltungsanordnung nach Anspruch 1, **dadurch gekennzeichnet, daß** der Widerstandswert des zu einem der beiden Feldeffekttransistoren (T2) parallelgeschalteten Widerstands (R) gleich dem Widerstandswert des elektrischen Verbrauchers (L) ist.

3. Schaltungsanordnung nach Anspruch 1, **dadurch gekennzeichnet, daß** die beiden Feldeffekttransistoren (T1, T2) von gleicher Art sind und daß. ihre Steuereingänge parallelgeschaltet sind.
